# EUROPEAN PATENT APPLICATION

(11) **EP 4 485 237 A1**
(43) Date of publication of application: **01.01.2025**
(21) Application number: 23315262.8
(22) Date of filing: 29.06.2023
(51) Int. Cl.: G06F 21/31, G06F 21/45, G06F 21/64

(54) **METHOD FOR SECURELY VERIFYING A PASSWORD DEDICATED TO A CLIENT APPLICATION ON A CLIENT DEVICE**

(71) Applicant: THALES DIS FRANCE SAS, 92190 Meudon (FR)
(72) Inventor: Foesser, Christophe, 13600 LA CIOTAT (FR)
(74) Representative: Bricks, Amélie

(57) **Abstract**

The present invention relates to a method for securely verifying a candidate password value derived from user credentials against a reference password value dedicated to a client application on a client device storing a try counter, said method being performed by the client application of the client device, said client device comprising : a secure hardware component storing a current cryptographic key pair comprising a current public cryptographic key and a current private cryptographic key specific to the client device, a first application memory storing a current try counter value of said try counter, and a second application memory storing a current signature of a try counter value with a private cryptographic key of a cryptographic key pair, and said method comprising :
- a) verifying (S1) the current try counter value stored in the first application memory and,
- b) verifying (S2) that the current signature stored in the second application memory of the client device is a valid signature of the current try counter value stored in the first application memory using the current public cryptographic key of the current cryptographic key pair stored in said secure hardware component,
- c) when the verifications of the current signature and of the value of the try counter are successful:
• generating (S31) a new current cryptographic key pair,
• updating (S32) said current try counter value,
• generating (S33) a new current signature of the updated current try counter value with the generated new current private cryptographic key of the generated new current cryptographic key pair,

- d) verifying (S4) the candidate password value against said reference password value.

## Description

### FIELD OF THE INVENTION

The present invention relates to the field of user authentication, and of associated cryptographic devices, and more particularly to a method for verifying a password which is protected against tampering of the try counter.

### BACKGROUND OF THE INVENTION

Users of digital devices or resources are commonly required to authenticate in order to unlock the device or service they wish to use. A widespread way of performing such an authentication is to input a password, which is supposed to be known only to the user trying to authenticate. Passwords such as PIN codes are for example still often used on mobile phones for unlocking the device itself or the SIM card of the device. Another way may be to provide biometric credentials from which a password may be derived.

Some applications running on a device such as a smartphone may also require the user to enter a dedicated password, called applicative password, to enable the user to run the application.

The verification process of such applicative passwords may be subject to various attacks, especially when the password inputted by the user is checked locally on the mobile device. Indeed, the verification process is purely software, and all the important assets of the password verification process (the password, the try counter...) are stored on the mobile device and managed by the application itself. Therefore, the verification process does not benefit from any security feature brought by hardware components or by the operating system. The verification processed may be bypassed by an attacker if he manages to alter the application code or to get access to the assets managed by the application.

As an example, an attacker may analyze the application code to understand the verification process and locate in memory the location of the password, the try counter or of the verification process result. The attacker may then either modify the code itself or the verification process result to directly bypass the verification process. He may also directly gain knowledge of the password. He may modify the try counter to be entitled an unlimited number of tries. After each try, the attacker may for example restore a previous value of the application memory storing the try counter, such that it never goes down to zero, which opens the way for a brute force attack on the password by repeatedly trying password values until the correct one is entered.

Some existing protections may be put in place in order to reduce the likelihood of such attacks, such as obfuscation of the verification process code in the application code, or detection of dynamic analysis tools used by the attacker. But such protections do not prevent attacks on the verification process such as the brute force attack described above. They only slow down the attacker.

Consequently, there is a need for a secure verification method of a password which is truly protected against tampering of the try counter and therefore prevents an attacker from performing a brute force attack against the password.

### SUMMARY OF THE INVENTION

For this purpose and according to a first aspect, this invention therefore relates to a method for securely verifying a candidate password value derived from user credentials against a reference password value dedicated to a client application on a client device storing a try counter expressing a remaining number of authorized password verification attempts, said method being performed by the client application of the client device, said client device comprising :
▪ a secure hardware component storing a current cryptographic key pair comprising a current public cryptographic key and a current private cryptographic key specific to the client device,
▪ a first application memory storing a current try counter value of said try counter,
▪ a second application memory storing a current signature of a try counter value with a private cryptographic key of a cryptographic key pair,
and said method comprising :
- a) verifying the current try counter value stored in the first application memory and,
- b) verifying that the current signature stored in the second application memory of the client device is a valid signature of the current try counter value stored in the first application memory using the current public cryptographic key of the current cryptographic key pair stored in said secure hardware component,
- c) when the verifications of the current signature and of the value of the try counter are successful:
   - generating a new current cryptographic key pair comprising a new current public cryptographic key and a new current private cryptographic key associated to the client device and replacing the current cryptographic key pair by the generated new current cryptographic key pair in the secure hardware component,
   - updating said current try counter value in the first application memory,
   - generating a new current signature of the updated current try counter value with the generated new current private cryptographic key of the generated new current cryptographic key pair and replacing the current signature by the generated new current signature in the second application memory,
- d) verifying the candidate password value against said reference password value.

By doing so, the try counter value can be certified as genuine by verifying its signature and no prior value of the try counter and associated signature can be verified as valid using the only cryptographic key pair stored in the secure hardware component, thus preventing any brute-force attack.

The method according to the first aspect may comprise: when the verification of the candidate password value is successful: resetting the try counter value in the first application memory to a default try counter value and updating the signature in the second application memory to a signature of the default try counter value with the current private cryptographic key stored in the secure hardware component. Thus, the client device is ready for the next authentication of the user.

The cryptographic key pairs may be Elliptic-curve cryptographic key pairs.

According to an embodiment, the method according to the first aspect may comprise an authentication step using biometric credentials and comprising when said authentication step fails, performing the steps a), b), c), d) as a secure backup solution.

According to another embodiment, generating a new current cryptographic key pair for storing in the secure hardware component of a client device owned by a user may comprise previously an authentication of the user with biometric credentials.

According to another embodiment wherein the generated new current cryptographic key pair is stored in the secure hardware component of the client device of a user after having been encrypted using a biometric encryption algorithm, the current private or public cryptographic key may be decrypted using a biometric decryption algorithm prior to any subsequent use.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a client device comprising:
▪ a secure hardware component storing a current cryptographic key pair comprising a current public cryptographic key and a current private cryptographic key specific to the client device,
▪ a first application memory storing a current try counter value,
▪ a second application memory storing a current signature of a try counter value with a private cryptographic key of a cryptographic key pair,
and configured for performing the steps of the method according to the first aspect.

Said secure hardware component may be among a Secure Enclave, a Trusted Execution Environment, a Secure Element, an embedded Secure Element, an integrated Secure Element or a Hardware Security Module.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a client device according to an embodiment of the present invention;
- Figures 2 and 3 illustrate schematically methods for securely verifying a candidate password value derived from user credentials against a reference password value according to embodiments of the present invention.

### DETAILED DESCRIPTION OF EMBODIMENTS OF THE INVENTION

The invention aims at enabling a secure verification of a password. Such a password is supposed to be an applicative password dedicated to a client application running on a client device. Such a client device may for example be a smartphone or a computer. The invention can be part of a sub-component such as a SDK integrated by the client application run by the client device.

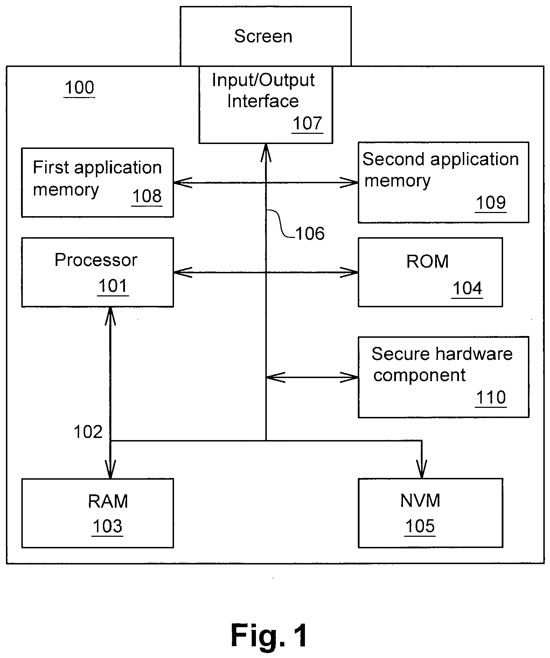

**Figure 1** is a schematic illustration of a client device 100. The client device 100 may include a processor 101 connected via a bus 102 to a random access memory (RAM) 103, a read-only memory (ROM) 104, and/or a non-volatile memory (NVM) 105. The client device 100 further includes a communication interface 106 by which the client device 100 may be connected to various forms of wireless networks, e.g., wide-area networks, WiFi networks, or mobile telephony networks. Alternatively, the client device 101 may connect to networks via wired network connections such as Ethernet. The client device may also include input/output means 107 providing interfaces to the user of the client device, such as one or more screens, loudspeakers, a mouse, tactile surfaces, a keyboard etc...

In order to access the application, or a specific feature of the application, the user of the client device is supposed to provide user credentials. The password verification process according to the invention aims at securely verifying that these user credentials are correct against a reference password value stored in a memory of the client device. The reference password value has been set in a memory of the client device prior to any authentication attempt, optionally through a back-end server connected to the client device.

In an embodiment, the user may first try to authenticate using another method. In such a case, the method according to the invention is just used as a secure backup solution when authentication using another method has failed.

When the user credentials are not correct the user is allowed to retry the authentication by providing new credentials a predetermined number of times. When this maximum number of retries has been reached, the user should not be allowed to try new credentials anymore. Therefore, the client device also comprises a first application memory 108 storing a try counter expressing the remaining number of authorized password verification attempts before the application is blocked.

In order to secure such a password verification process against attacks allowing to bypass the try counter, a first main idea of the invention is to bind the try counter to the hardware of the client device, such that the password verification process does not depend anymore on software material only. In order to achieve such a binding, the client device comprises:
- a second application memory 109 storing a signature of the try counter generated with a cryptographic secret key and
- a secure hardware component 110 storing this cryptographic secret key, and the corresponding public key.

Such a cryptographic key pair may for example be an Elliptic-curve cryptographic key pair and the signature may be generated using an asymmetric cryptographic scheme such as ECDSA (Elliptic Curve Digital Signature Algorithm) or any other kind of asymmetric key scheme such as RSA. The cryptographic key pair is supposed to be specific to the client device. It is not a key pair shared between multiple devices: among a set of client devices according to the invention, each cryptographic key pair associated to a client device is supposed to be different than the cryptographic key pairs associated to the other client devices. It is preferably not even shared between multiple applications on the same device. In addition, the cryptographic key pair is preferably generated onboard by the device itself, not imported from the outside.

The try counter stored in the first application memory and the signature of the try counter stored in the second application memory may be stored in cleartext or in a protected, encoded, or encrypted form.

Such a secure hardware component is a component which is separate from the processor and the memories of the client device, and which is protected against tampering. It may for example be a Secure Enclave, a Trusted Execution Environment (TEE) or a secure element which may embedded (eSE) or integrated (iSE) in a SOC with other components of the client device, or any Hardware Security Module (HSM).

The password verification process is configured to start, at each try of new credentials, by verifying the signature of the try counter value. By doing so, an attacker cannot change at will the value of the try counter to an arbitrary value. But an attacker could still reload a past value of the try counter along with the corresponding genuine signature of this counter value, and retry new credentials over and over again without ever having the try counter reaching zero.

Therefore, the second main idea of the invention is to renew the cryptographic keys stored in the secure hardware component at each try of new user credentials, when the try counter is decremented, and to generate a new signature for the new try counter value with the new cryptographic private key. By doing so, if an attacker reloads an old try counter value and its signature, it will not be recognized as valid since the signature cannot be verified anymore using the cryptographic key stored in the secure hardware component.

In the preceding paragraphs, the first application memory storing the try counter and the second application memory storing a signature of a try counter value are described as two distinct memories, separate from the other memories of the client device. As an alternative, they could be two memory locations in the memory space allocated to the client application in the NVM memory or any other persistent storage of the client device.

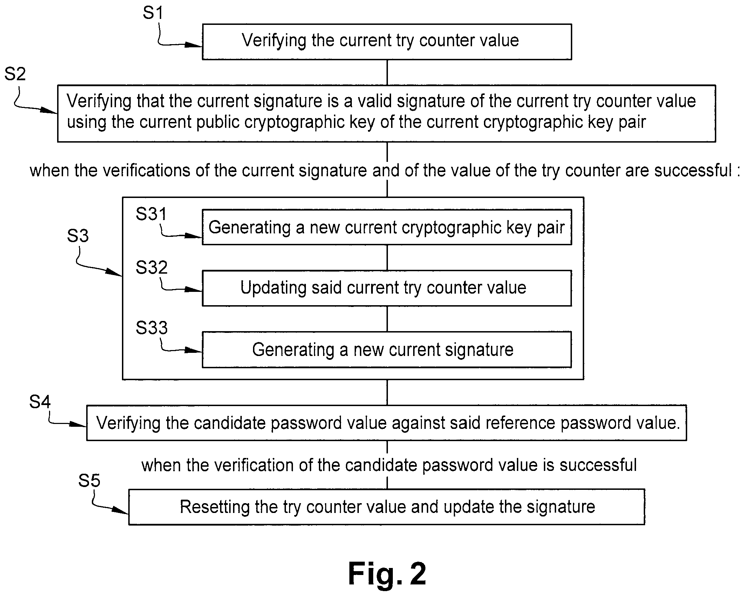

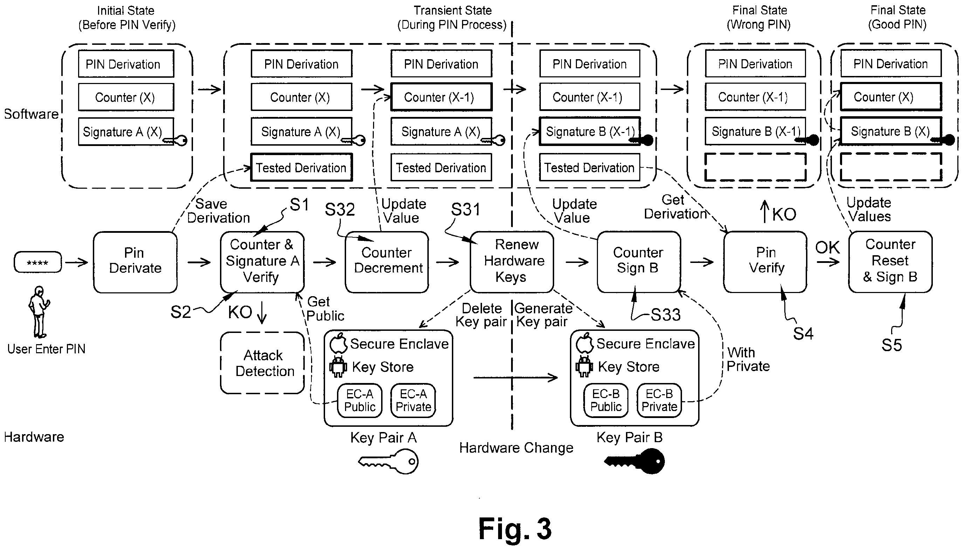

The following paragraphs describe, according to a first aspect of the invention, and as depicted on **figure 2****,** the steps of a **method** for securely verifying a candidate password value derived from user credentials against a reference password value. Figure 3 depicts these steps in the case of using as password a PIN code but the same steps will be performed when using any other type of password.

This method is performed by the client application to which the reference password value is dedicated in the frame of an authentication process of the user to this client application. In the following paragraphs, the user is supposed to have provided on the client device, prior to this method, user credentials, which can be any combination of digits, characters or special characters, including ASCII table values and emojis. Such credentials may also be the result of an acquisition process of any data authenticating the user such as biometric data. When such credentials comprise only digits, it can be called a PIN (personal identification number). The candidate password value may be identical to the user credentials or it can be any value derived from it, such as a hash of the user credentials or the result of encrypting the user credentials using an encryption algorithm. The reference password value is stored in a memory of the client device, such as a memory space allocated to the client application. Since it is the candidate password value that is compared to the reference password value, the reference password value is not supposed to be identical to the credentials to be provided by the user for a correct authentication, but rather a value derived from it using the same derivation method as the one used for deriving the candidate password value from the user credentials.

When the method according to the invention is executed:
- the secure hardware component stores a current cryptographic key pair comprising a current public cryptographic key and a current private cryptographic key which are specific to the client device,
- the first application memory stores a current try counter value of the try counter,
- the second application memory stores a current signature of a try counter value with a private cryptographic key of a cryptographic key pair.

Before the method is performed, the user may already have made several attempts to authenticate himself. Therefore, the current try counter value is not necessarily equal to its maximal value. If the client device has not been tampered with, the current signature stored in the second application memory should be a signature of the current try counter value stored in the first application memory and should be verifiable using the current public cryptographic key stored in the secure hardware component.

In a first step S1, the client application verifies the current try counter value stored in the first application memory. It checks that the current try counter value is not equal to zero, and therefore that a new try of a candidate password code value is authorized.

If the try counter value is zero, the authentication process is exited with an error. In that case, it may be reset to a non-zero default value by a distant server, after verification of some security prerequisites. After the try counter has been reset, the distant server may also trigger an update of the current signature stored in the second application memory such that it is a signature of the new value of the try counter.

In a second step S2, the client application verifies that the current signature stored in the second application memory of the client device is a valid signature of the current try counter value stored in the first application memory using the current public cryptographic key of the current cryptographic key pair stored in the secure hardware component. This verification enables to make sure that the try counter value is authentic and that it is bound to the last cryptographic key pair stored in the secure hardware component. It is proof that the try counter value has not been replaced by an older genuine value of the try counter value, signed with a former cryptographic key pair. In a first embodiment, the signature verification is requested to the secure hardware component. Alternatively, the signature verification is performed by a protected software using the current public cryptographic key provided by the secure hardware component.

The first step and the second step may be performed in any order. The providing by the user of the user credentials is supposed here above to be performed before these two steps but it could also be done in between or after performing these two steps.

When this verification fails, an attack is detected, the authentication process is stopped. An alarm may be raised and or various countermeasures against the attack may be executed.

When both verifications succeed, the client application, in a third step S3 updates the try counter value and the cryptographic material. This third step S3 comprises :
- a first substep S31 during which the client application generates a new current cryptographic key pair comprising a new current public cryptographic key and a new current private cryptographic key associated to the client device and replaces the current cryptographic key pair by the generated new current cryptographic key pair in the secure hardware component 110. In an embodiment, the generation of the new cryptographic key pair requires previously an authentication of the user with biometric credentials. In an embodiment, the current cryptographic key pair is first deleted and then the new current cryptographic key pair is generated. Alternatively, the new current cryptographic key pair is generated with the same identifier as the current cryptographic key pair, without any prior deletion of it, and the new key pair automatically replaces the existing one.
- a second substep S32 during which the client application updates the current try counter value in the first application memory. The try counter value is usually decreased of one unit at each try but another increment or any other proprietary method may be chosen.
- a third substep S33 during which the client application generates a new current signature of the updated current try counter value with the generated new current private cryptographic key of the generated new current cryptographic key pair. The client application then replaces the current signature by the generated new current signature in the second application memory.

As a result, at the end of the third step, the try counter value has been updated to indicate that one more try has been performed and the authenticity of the new try counter value can be verified thanks to the new current signature. Since this signature is the only one that has been signed, and will ever be signed, with the new current private cryptographic key, no other prior signature can be verified as valid using the only cryptographic key pair now stored in the secure hardware component, thus preventing any brute-force attack.

In an embodiment, at the first substep S31, the generated new current cryptographic key pair is stored in the secure hardware component of the client device only after it has been encrypted using a biometric encryption algorithm. In such a case, the current private or public cryptographic key shall be decrypted using a biometric decryption algorithm prior to any subsequent use.

Finally, in a fourth step S4, the client application verifies the candidate password value against the reference password value.

When the verification of the candidate password value is successful, the user has been successfully authenticated.

Therefore, in a fifth step S5, the client application may reset the try counter value in the first application memory to a default try counter value and update the signature in the second application memory to a signature of the default try counter value with the current private cryptographic key stored in the secure hardware component.

When the verification of the candidate password value failed, the user can be asked to provide new user credentials and the authentication process may go back to the first step of the method according to the invention, for verifying these new credentials.

According to a second aspect, the invention is also related to a computer program product directly loadable into the memory of at least one computer, comprising software code instructions for performing the steps of the method according to the first aspect as described above when said product is run on the computer.

According to a third aspect, this invention therefore relates also to a client device 100 comprising :
▪ a secure hardware component 110 storing a current cryptographic key pair comprising a current public cryptographic key and a current private cryptographic key specific to the client device,
▪ a first application memory 108 storing a current try counter value,
▪ a second application memory 109 storing a current signature of a try counter value with a private cryptographic key of a cryptographic key pair,
and configured for performing the steps of the method according to the first aspect as described here above.

As a result, the method according to the invention, and the corresponding device enable to bind the signed try counter to a hardware component that cannot been tampered with by an attacker. Renewing the cryptographic key pairs stored in this hardware component at each try of a new password makes that only the very last value of the try counter may be verified as valid using the public cryptographic key stored in the hardware component. Therefore, the method according to the invention also enables to prevent a replay of an old try counter value and brute-force attacks on the password.

## Claims

1. A method for securely verifying a candidate password value derived from a user credentials against a reference password value dedicated to a client application on a client device (100) storing a try counter expressing a remaining number of authorized password verification attempts,
said method being performed by the client application of the client device, said client device comprising :
▪ a secure hardware component (110) storing a current cryptographic key pair comprising a current public cryptographic key and a current private cryptographic key specific to the client device,
▪ a first application memory (108) storing a current try counter value of said try counter,
▪ a second application memory (109) storing a current signature of a try counter value with a private cryptographic key of a cryptographic key pair,
and said method comprising :
- a) verifying (S1) the current try counter value stored in the first application memory (108) and,
- b) verifying (S2) that the current signature stored in the second application memory of the client device (109) is a valid signature of the current try counter value stored in the first application memory (108) using the current public cryptographic key of the current cryptographic key pair stored in said secure hardware component (110),
- c) when the verifications of the current signature and of the value of the try counter are successful:
• generating (S31) a new current cryptographic key pair comprising a new current public cryptographic key and a new current private cryptographic key associated to the client device and replacing the current cryptographic key pair by the generated new current cryptographic key pair in the secure hardware component (110),
• updating (S32) said current try counter value in the first application memory (108),
• generating (S33) a new current signature of the updated current try counter value with the generated new current private cryptographic key of the generated new current cryptographic key pair and replacing the current signature by the generated new current signature in the second application memory (109),
- d) verifying (S4) the candidate password value against said reference password value.

2. The method of claim 1, comprising: when the verification of the candidate password value is successful: resetting the try counter value in the first application memory (108) to a default try counter value and updating the signature in the second application memory (109) to a signature of the default try counter value with the current private cryptographic key stored in the secure hardware component (S5).

3. The method of claim 1 or 2, wherein the cryptographic key pairs are Elliptic-curve cryptographic key pairs.

4. The method of any one of claims 1 to 3, comprising an authentication step using biometric credentials and comprising when said authentication step fails, performing the steps a), b), c), d) as a secure backup solution.

5. The method of any one of claims 1 to 4, wherein generating a new current cryptographic key pair (S31) for storing in the secure hardware component (110) of a client device (100) owned by a user comprises previously an authentication of the user with biometric credentials.

6. The method of any one of claims 1 to 5, wherein the generated new current cryptographic key pair is stored in the secure hardware component of the client device of a user after having been encrypted using a biometric encryption algorithm and the current private or public cryptographic key is decrypted using a biometric decryption algorithm prior to any subsequent use.

7. A computer program product directly loadable into the memory of at least one computer, comprising software code instructions for performing the steps of any one of claims 1 to 6, when said product is run on the computer.

8. A client device (100) comprising :
▪ a secure hardware component (110) storing a current cryptographic key pair comprising a current public cryptographic key and a current private cryptographic key specific to the client device,
▪ a first application memory (108) storing a current try counter value,
▪ a second application memory (109) storing a current signature of a try counter value with a private cryptographic key of a cryptographic key pair,
and configured for performing the steps of any one of claims 1 to 6.

9. The client device of claim 8, wherein said secure hardware component (110) is among a Secure Enclave, a Trusted Execution Environment, a Secure Element, an embedded Secure Element, an integrated Secure Element or a Hardware Security Module.
